Europäisches Patentamt

European Patent Office

Office européen des brevets

(11) Numéro de publication: **0 278 882 B1**

(12) **FASCICULE DE BREVET EUROPEEN**

(45) Date de publication de fascicule du brevet: **03.02.93** (51) Int. Cl.5: **A61C 9/00**, G01B 11/24

(21) Numéro de dépôt: **88420042.9**

(22) Date de dépôt: **12.02.88**

(54) **Procédé de prise d'empreinte médicale et dispositif pour sa mise en oeuvre.**

(30) Priorité: **13.02.87 FR 8702339**

(43) Date de publication de la demande:
**17.08.88 Bulletin 88/33**

(45) Mention de la délivrance du brevet:
**03.02.93 Bulletin 93/05**

(84) Etats contractants désignés:
**AT BE CH DE ES FR GB GR IT LI LU NL SE**

(56) Documents cités:
**DE-A- 2 719 696**
**FR-A- 2 304 892**
**FR-A- 2 562 236**
**US-A- 3 861 044**
**US-A- 4 070 683**

**APPLIED OPTICS, vol. 20, no. 19, 1 octobre
1981, pages 3385-3387, optical Society of
America, New York, US; G.K. JAISINGH et al.:
"Contouring by laser speckle"**

(73) Titulaire: **Sopha Bioconcept**
**Château de Malissol**
**F-38200 Vienne(FR)**

(72) Inventeur: **Duret, François**
**Rue Paul Claudel**
**F-38690 Le Grand Lemps(FR)**
Inventeur: **Blouin, Jean-Louis**
**Château de Malissol**
**F-38200 Vienne(FR)**

(74) Mandataire: **Boutin, Antoine**
**Cabinet Tony-Durand, 77, Rue Boissière**
**F-75116 Paris(FR)**

Rank Xerox (UK) Business Services

## Description

La présente invention a pour objet un procédé de prise d'empreinte médicale tridimensionnelle et un dispositif pour sa mise en oeuvre.

Le domaine d'applications de ce procédé est constitué par la saisie des formes du site d'implantation d'une prothèse dentaire fixe ou mobile et de son environnement en vue de la réalisation d'une prothèse, par l'analyse volumique en vue d'un diagnostic d'une partie de la bouche, par l'analyse de toute partie du corps humain dont le diagnostic et/ou la thérapeutique associée nécessitent sa visualisation sous forme d'images informatisées, ainsi que par toute saisie de forme en vue de la réalisation d'une prothèse telle que prothèse de hanche, auriculaire, occulaire, du genou, des doigts et d'autres articulations.

Il est connu de réaliser des prises d'empreintes médicales à l'aide d'une pâte en dentisterie, par empreinte sanglante nécessitant une intervention chirurgicale, dans le domaine médical, par micropalpage, ou par des méthodes optiques tridimensionnelles mettant en oeuvre, par exemple, des rayonnements ionisants (scanner, tomographie tridimensionnelle), des rayonnements non ionisants (photogrammétrie, stéréoscopie ou méthodes interférentielles telles que holographie) ou par réception de messages (RMN ou ultra-sons).

Les méthodes mettant en oeuvre une prise d'empreinte à l'aide de pâtes sont longues et nécessitent une bonne habileté de l'opérateur. Des techniques, telles que la photogrammétrie, offrent un manque de précision. D'autres techniques telles que l'holographie, sont très complexes et coûteuses à mettre en oeuvre, et offrent des performances qui sont parfois supérieures à celles strictement nécessaires.

La présente invention vise à remédier à ces inconvénients en fournissant un procédé de prise d'empreinte médicale, de conception simple offrant une image en trois dimensions avec une bonne précision.

A cet effet, le procédé qu'elle concerne consiste à projeter, sur la partie du corps dont l'empreinte est à saisir, une grille à profil sinusoïdal, puis à répéter cette projection au moins deux fois, pendant un temps très bref, avec un décalage de phase entre deux projections successives d'une valeur égale à $2\pi/n$, où n est le nombre de projections, à effectuer une lecture optique de chaque image projetée, à mémoriser chacune de ces images, puis à les corréler, en observant les variations de l'intensité résultant des variations du décalage de phase, en chaque point de l'objet, et permettant la détermination par calcul de la profondeur de chaque point par rapport à un plan de référence, les deux autres dimensions étant définies, en fonction du système optique utilisé, dans le plan du capteur.

Le principal avantage de ce système tient dans sa grande sensibilité qui, pour la cote z correspondant à la profondeur, est de l'ordre de P/100, ou P est le pas du réseau projeté. Il est donc possible de travailler avec des fréquences spatiales faibles donc avec un minimum de pertes de contraste dues aux fonctions de transfert des optiques et des objets dont la forme est à saisir.

Par ailleurs, le principe de mesure nécessite des calculs relativement plus simples que ceux nécessaires dans les techniques habituelles de Moiré. Enfin, ce système est insensible aux différences de réflectivité de l'objet et permet une détermination non ambiguë du sens des déformations (creux ou bosses), ce qui est particulièrement utile pour les prises d'empreintes dentaires.

Selon un premier mode de mise en oeuvre, la grille à profil sinusoïdal est projetée suivant un faisceau de rayons parallèles.

Selon un autre mode de mise en oeuvre, la grille à profil sinusoïdal est projetée suivant un faisceau de rayons divergents et en ce que le plan de référence est perpendiculaire à l'axe de projection.

Avantageusement, ce procédé consiste à utiliser conjointement une projection complémentaire d'un deuxième système de franges, afin d'obtenir une différence de phase très précise avec une indétermination de $2\pi$ avec le premier système, et une différence grossière de phase mais sans indétermination de $2\pi$ avec le second, et la corrélation des deux résultats donne une différence de phase très précise et sans indétermination de $2\pi$ en tout point. Dans ce cas, le second système de franges est réalisé par une projection unique sans décalage et, dans ce cas, le calcul de différence de phase est effectué par une méthode de sous-échantillonnage ou une méthode de FOURRIER ou toute autre méthode équivalente d'analyse de la phase.

Selon un mode préféré de mise en oeuvre, ce procédé consiste à analyser les variations de la phase du codage déformé par l'objet dans les deux directions (x, y) définies dans le plan du capteur, en tenant compte du taux de modulation et de la réflectivité de l'objet pour produire une image binaire codée 1 si la phase existe et est continue, et codée O si la phase n'existe pas ou est discontinue, puis en considérant l'ensemble des images ainsi obtenues, à regrouper les images de même valeur, et à en définir la frontière par des méthodes de dilatation-érosion et de squelettisation d'objets binaires.

Afin d'obtenir une bonne précision de la mesure tout en mettant en oeuvre des calculs simples, le nombre de projections d'images de la grille sur la partie du corps à observer est au moins égal à trois.

En outre, ce procédé consiste à disposer, sur la partie du corps à observer, une pluralité de points de repères visibles dans chacune des positions de prise d'image, à effectuer plusieurs vues sous des angles différents, à détecter dans chacune des vues la position (x, y) de chaque point, puis par interpolation sur le relief, la valeur z de celui-ci, puis par association des points de repères identiques physiquement à rassembler l'ensemble des surfaces de chaque vue dans un même relief dont les coordonnées sont définies par rapport à un seul et même référentiel commun.

Avantageusement, le procédé consiste à calculer la position de chaque point de repère en x et y sur l'image de réflectivité, par analyse de l'histogramme des niveaux de gris, puis à sélectionner les taches noires d'une grosseur convenable, et enfin à donner le centre de gravité pondéré par les niveaux de gris à l'intérieur de ces microtaches.

Il est à noter que les points de repères peuvent être constitués par des points caractéristiques de la partie du corps à étudier tels que sillon, cuspide, plateau du moignon, rayures ou des points supportés par des objets rapportés sur le corps à étudier tels que des clamps dans une application dentaire ou encore par des points de repères déposés par projection d'encre ou similaire sur la partie du corps à étudier.

De toute façon, l'invention sera bien comprise à l'aide de la description qui suit, en référence au dessin schématique annexé représentant, à titre d'exemples non limitatifs, plusieurs formes d'exécution du dispositif pour la mise en oeuvre de ce procédé :

Figure 1 est une vue de principe des principaux éléments constitutifs de ce dispositif;

Figure 2 est une vue très schématique de la sonde;

Figure 3 est un schéma bloc des principaux organes constitutifs du dispositif;

Figure 4 est une vue en perspective d'un sous ensemble permettant la création d'un codage;

Figure 5 est une vue de côté d'un système de modulation de phase;

Figure 6 est une vue de côté d'un premier système de déphasage;

Figure 7 est une vue de côté d'un second système de déphasage;

Figure 8 est un schéma-bloc représentant le système de traitement;

Figure 9 est une vue d'un schéma-bloc représentant la carte de traitement vidéo;

Figure 10 est un schéma-bloc représentant la carte processeur;

Figure 11 est un schéma-bloc représentant la carte mémoire d'images.

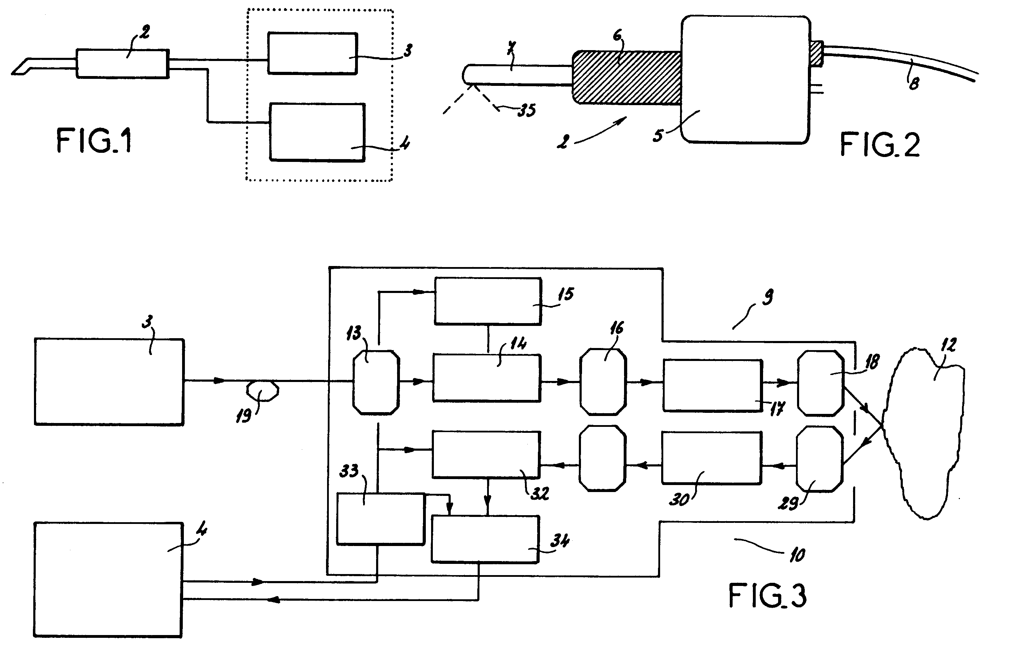

Comme montré à la figure 1, le dispositif comprend une sonde optique **2** reliée, d'une part, à une source lumineuse **3** et, d'autre part, à un système de traitement **4**.

Le choix de la source conditionne, en grande partie, les caractéristiques du système, la source choisie tenant compte :

- d'une optimisation du spectre d'émission de la source et de la bande passante du système,
- d'une puissance adaptée pour assurer un éclairement suffisant sur le détecteur en fonction de la transmission du système,
- d'un encombrement minimal pour une puissance donnée.

Lorsque la source ne peut pas être placée dans la sonde pour des raisons d'encombrement, il est nécessaire de conduire la lumière entre la source et la sonde, ce qui peut être réalisé à l'aide d'une fibre optique. Dans ce cas, la lumière est colimatée à l'aide d'une optique de couplage à partir du centre de laquelle l'extrémité d'une fibre optique est vue sous un angle $\alpha$, tel que $\alpha$ est inférieur ou égal à P/4D, où P est le pas de grille et D est la profondeur de champ maximale correspondant à une modulation correcte de la grille projetée.

La longueur d'onde de la lumière projetée peut être inférieure à 520 $\mu$m, la source lumineuse émettant dans le bleu ou l'ultra-violet, ou bien la source lumineuse peut être constituée par un dispositif solide à semi-conducteur type diode laser.

Comme montré à la figure 2, la sonde optique **2** se présente sous la forme d'un boîtier de dimensions réduites comportant un corps **5** ainsi qu'une partie **6** adaptée pour une tenue en main par le praticien, prolongée par un bec **7** permettant les projections de codage et les reprises d'images. Si la source de lumière est constituée par une diode laser ou un autre composant du même type, elle peut être logée dans le corps **5**. Dans les autres cas, la source de lumière est extérieure et le flux lumineux est conduit par une fibre optique qui peut, par exemple, être associée au câble **8**, assurant le transfert des signaux électroniques entre la sonde proprement dite et le système de traitement.

La sonde optique comprend une voie de projection du codage désignée à la figure 3 par la référence générale **9**, et une voie d'observation de l'image **10**, l'objet dont la forme est à saisir étant défini sur cette même figure par la référence **12**.

La voie de projection du codage comprend une optique de collimation **13**, et un réseau **14** muni de son système de déphasage **15**, et un système optique d'imagerie comprenant une optique relais **16**, une optique de transport d'images **17** et un objectif de projection **18**. Sur cette même figure, la source lumineuse est désignée par la référence **3**, et la fibre de transfert du flux lumineux porte la référence **19**.

Le principe de la méthode de profilométrie par codage de phase suppose de créer un codage de type sinusoïdal et modulé en phase. La création du codage comprend deux éléments couplés:

- le réseau, et
- le modulateur de phase.

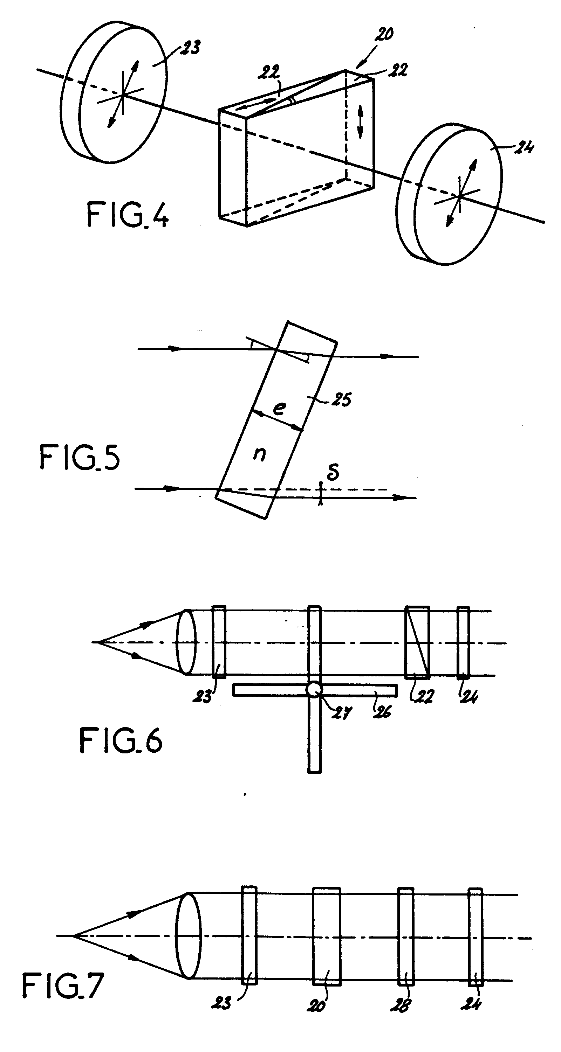

Dans la forme d'exécution représentée à la figure 4, le réseau de transmission comprend un prisme de Wollaston **20** constitué par deux coins semblables **22** taillés dans un matériau biréfringent, par exemple du quartz, dont les axes rapide et lent sont opposés. Ce prisme est éclairé par une onde lumineuse monochromatique, et placé entre deux polariseurs **23** et **24** dont les axes sont croisés ou parallèles et font un angle de 45° avec ceux du prisme, la valeur P du pas des franges créées à l'interface du prisme étant donnée par la formule

$$P = \frac{\lambda}{2\Delta n \ tg \ \theta}$$

où $\lambda$ est la longueur d'onde de la source lumineuse,

où $\theta$ est l'angle de chacun des prismes biréfringents constituant le prisme de Wollaston, et

$\Delta n$ est la différence des indices ordinaire et extraordinaire du matériau.

L'avantage fondamental de ce système est la compensation complète des effets thermiques et mécaniques, étant donné que les rayons suivent le même trajet. Le pas du réseau est à choisir en fonction de la taille de l'objet, du grandissement du système optique et de la profondeur de champ D.

Un des avantages de la méthode de profilométrie par analyse de phases est que l'incertitude en z est de l'ordre de P/100, ce qui est avantageux pour l'étude précise de petits objets, comme tel est le cas dans une application dentaire, étant rappelé que les procédés classiques de Moiré ou interférentiels n'apportent qu'une précision inférieure ou égale à P/10.

Pour l'application au domaine dentaire, un pas de réseau entre 1 et 1,5 mm au niveau du plan de référence peut, avantageusement, être retenu.

La modulation de phase correspond pratiquement à M translations optiques du réseau d'une quantité nP/M, si l'on fait M images, où P est le pas du réseau et n est un nombre entier compris entre O et M, M étant généralement égal à 3 ou 4 pour des raisons de commodités de calculs.

Ces translations peuvent être obtenues par un déplacement mécanique du réseau, par un procédé optique ou par un modulateur électro-optique.

En faisant, comme montré à la figure 5, tourner une lame de verre **25** d'indice n et d'épaisseur e dans un faisceau parallèle, on provoque un déplacement latéral de ce faisceau d'une valeur S telle que

$$S = e \ \frac{\sin(i-r)}{\cos(r)}$$

où i est l'angle d'incidence du faisceau sur la lame, et

r est l'angle réfracté, ces angles étant liés par la relation

$$\sin i = n \sin r$$

En lumière polarisée, il est possible d'utiliser des lames de phase pour créer la modulation souhaitée.

Comme montré à la figure 6, des lames de déphasage connues **26** sont successivement introduites entre le polariseur **23** et le prisme de Wollaston **22**. On crée ainsi un déphasage du réseau de la valeur du déphasage de la lame de phase. Les différentes lames **26** peuvent être montées sur un barillet **27** motorisé dont la rotation est synchronisée avec la prise d'image.

Selon une autre possibilité, représentée à la figure 7, une lame quart d'onde **28** est placée après le prisme de Wollaston, son axe étant parallèle à l'axe du polariseur. En faisant tourner l'analyseur **24** de 180°, on sélectionne en continu une valeur de déphasage entre 0 et $2\pi$.

Pour faire tourner les lames, il est possible d'utiliser soit un moteur pas à pas, soit un moteur à courant continu. Dans le cas du moteur pas à pas, la position des lames est connue par comptage de pas à partir d'une position 0. Cette position peut être déterminée par utilisation d'un disque fendu présentant une ouverture, qui lui en est perpendiculaire, et fixé à l'arbre du moteur ou du barillet. Une photo-diode éclaire le disque d'un côté et une cellule photo-électrique observe de l'autre côté. Au passage du trou ou de la fente, devant la photo diode, la cellule s'active et émet un signal vers le système de traitement.

Dans le cas d'un moteur à courant continu, il est préférable de monter en bout de l'axe du barillet un potentiomètre résistif, la mesure de résistivité du potentiomètre permettant de connaître la position en continu de l'axe du moteur. L'ensemble est commandé par un asservissement électronique situé dans le système de traitement. La rotation des lames est assurée soit directement en bout d'arbre, soit par roues crantées ou par courroies crantées, cette dernière solution étant préférée dans le cas d'un moteur à courant continu.

Comme montré à la figure 3, la voie d'observation comprend essentiellement un objectif de reprise d'image **29**, un dispositif de transport d'images **30** et un détecteur d'images **32**. Le détecteur d'images est avantageusement un capteur de type C.C.D. couplé à une électronique de synchronisation **33** et à une voie de sortie numérique ou vidéo **34**.

Avantageusement, la sonde est équipée de manière à pouvoir insuffler un jet d'air comprimé **35** sur l'objet, dans une direction parallèle à l'axe de projection et d'observation. Ce jet a pour objectif de nettoyer la surface observée de ses impuretés et, dans le cadre d'une prise d'empreinte endobuccale, il permet d'écarter la gencive et d'accéder à des zones profondes par exemple au niveau du sulcus gencival.

Il est également avantageux d'équiper la sonde d'un dispositif évitant la formation de buée. Ce dispositif comprend des moyens de chauffage à une temperature au moins égale à 30°C, ces moyens de chauffage fonctionnant lorsque la sonde est en position d'observation ou lorsqu'elle est en position de repos sur son support.

Ces moyens de chauffage peuvent être constitués par une résistance chauffante alimentée par un courant à basse tension ou par un film d'air chaud envoyé sous une légère pression.

En pratique, le praticien dépose, à l'aide d'un stylo marqueur adapté, quelques points sur la dent ou sur le moignon ou sur toute autre zone dont le relief doit être déterminé. Après introduction du bec de la sonde dans la bouche du patient, dans le cas d'une saisie de forme endobuccale, il est procédé à la visualisation directe, sans codage du site à étudier.

La praticien positionne alors la sonde suivant l'angle de prise du vue qui lui paraît le plus intéressant, puis commande l'acquisition de la première vue. A ce moment, le système synchronise les acquisitions d'images avec le déphasage du réseau et, éventuellement, la stroboscopie de la source lumineuse.

Une fois les images acquises, le praticien peut retirer la sonde et vérifier sa prise d'empreinte en sélectionnant trois types d'informations:

- l'image sans codage de la zone acquise,
- une représentation graphique en trois dimensions de la surface calculée,
- des indicateurs de qualité du relief correspondant à la précision de la mesure et fonction de la réponse au codage.

Après validation, cette vue sert de référence pour l'ensemble des vues suivantes pour lesquelles le praticien procède selon le même principe suivant des angles différents. A partir de la deuxième prise de vue et de la détection des points de repères, le système peut délivrer sur l'écran une image graphique représentant le relief reconstruit à partir des surfaces corrélées.

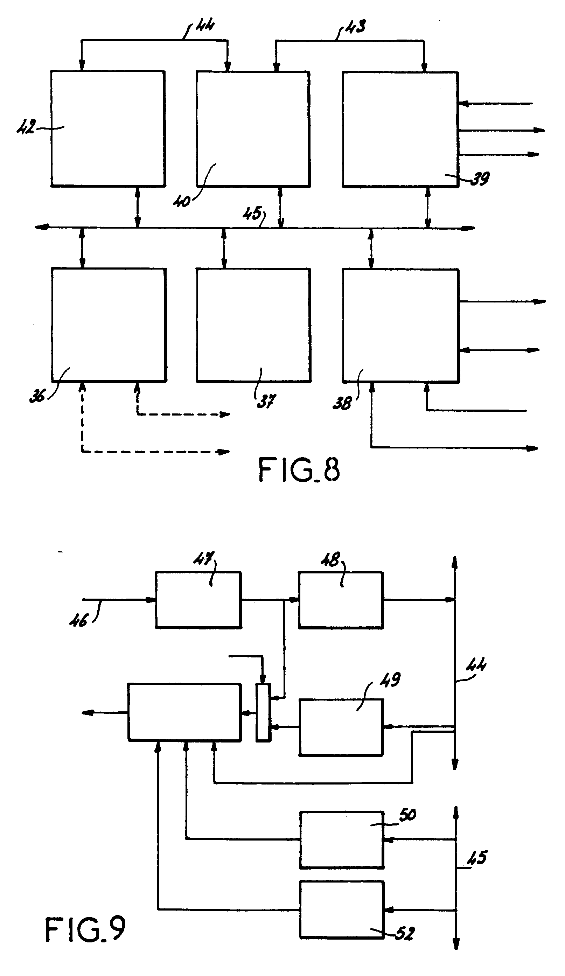

Comme montré à la figure 8, le calculateur comprend six modules électroniques reliés par trois bus, les modules étant constitués par une carte unité centrale **36**, une carte de mémoire vive de calcul **37**, une carte interfaces spécialisées **38**, une carte de traitement du signal vidéo **39**, une carte mémoire d'images **40** et une carte processeur de calcul spécialisé **42**, ces modules étant reliés entre eux par un bus vidéo numérique **43**, un bus processeur **44** et un bus système **45**.

La figure 9 représente la carte de traitement du signal vidéo servant d'interface entre la caméra disposée dans la sonde d'une part, l'écran de visualisation et le calculateur d'autre part. Cette carte reçoit en entrée **46**, un signal analogique des images provenant de la sonde qui, d'une part, est conditionné en **47** et injecté à l'intérieur d'un numériseur **48** constitué par un convertisseur analogique-numérique sur au moins huit bits, ce signal numérisé étant ensuite envoyé sur le bus vidéo et, d'autre part, envoyé à l'écran de visualisation à travers un module de visualisation.

Il est à noter que la carte de traitement du signal vidéo reçoit, en entrée, un signal numérique de huit bits image au moins provenant du bus vidéo, qui sont injectés après leur passage dans une table de conversion programmable depuis le bus système dans un convertisseur numérique analogique **49**, et mélange ce signal analogique avec, premièrement, une image graphique provenant d'au moins un bit graphique du bus vidéo, deuxièmement des caractères alpha-numériques provenant d'un sous-module **50** permettant de générer ces caractères à partir du bus système **45** et, troisièmement, un curseur de forme quelconque provenant d'un sous-module **52** générateur de curseur associé à un registre de commande de position.

Le signal résultant est envoyé à l'écran de visualisation, l'image ainsi constituée se décomposant en parties distinctes ou superposées, à savoir :

- une partie représentant l'un des plans mémoire image ou bien l'image provenant de la sonde sur laquelle apparaît, en surbrillance ou en couleur différente, l'état du ou des bit(s) provenant des plans des mémoires graphiques sélectionnées,
- un partie qui constitue une zone d'affichage de texte alpha-numérique, et
- un curseur de forme quelconque qui peut être activé et qui peut adresser n'importe quel point de l'écran.

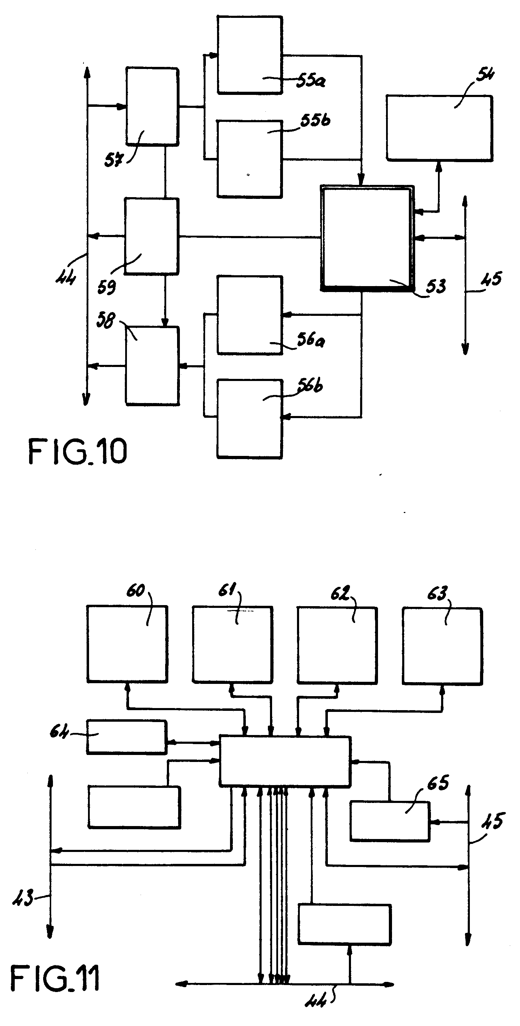

La figure 10 représente la carte processeur. Ce module permet le traitement rapide des images et est associé à des mémoires locales de travail qui sont de quatre types : des mémoires de programme, des mémoires de données d'entrée, des mémoires de données de sortie et des registres internes.

Sur la figure 10, le processeur de traitement rapide est désigné par la référence **53**, la mémoire de programme local par la référence **54**, les mémoires de données d'entrée par les références **55a** et **55b**, les mémoires de donnée sortie par les références **56a** et **56b**, des aiguillages étant prévus entre le bus processeur **44**, les mémoires d'entrée, les mémoires de sortie et le processeur de traitement rapide, qui sont désignés respectivement par les références **57**, **58** et **59**. La carte processeur reçoit en entrée simultanément un flot de données numériques d'au moins deux images provenant par le bus processeur **44** de la carte mémoire d'images **40**, traite ce flot de données, pixel à pixel, suivant des programmes préchargés par le bus système **45** et délivre, sur ce même bus processeur **44**, les résultats des calculs sous forme numérique.

La figure 11 représente la carte mémoire d'image. Cette carte mémoire d'image contient au moins quatre images numérisées de huits bits chacune, dans des dans **60**, **61**, **62** et **63**, et un plan graphique **64** de quatre bits et dispose d'un sous-module **65** programmable par le bus système **45** qui permet de multiplexer et d'aiguiller les images et plans graphiques en entrée ou en sortie vers les trois bus système **45**, vidéo **43** et processeur **44**.

Selon une autre caractéristique de l'invention, la carte interfaces spécialisée **38** dispose de moyens électroniques permettant de synchroniser l'acquisition des images provenant de la sonde avec la carte mémoire et les moyens d'entraînement en rotation des lames, ces moyens électroniques étant déclenchés extérieurement par l'utilisateur.

Avantageusement, les six modules électroniques du calculateur sont contenus sur une même carte, la carte étant divisée en six parties imbriquées.

## Revendications

1. Procédé de prise d'empreinte médicale tridimensionnelle, par projection d'un codage à partir d'une source lumineuse monochromatique sur la partie du corps dont l'empreinte est à saisir, caractérisé en ce qu'il consiste à projeter, sur la partie du corps dont l'empreinte est à saisir, une grille à profil sinusoïdal, puis à répéter cette projection au moins deux fois, pendant un temps très bref, avec un décalage de phase entre deux projections successives d'une valeur égale à $2\pi/n$, où n est le nombre de projections, à effectuer une lecture optique de chaque image projetée, à mémoriser chacune de ces images, puis à les corréler, en observant les variations de l'intensité résultant des variations du décalage de phase, en chaque point de l'objet, et permettant la détermination par calcul de la profondeur de chaque point par rapport a un plan de référence, les deux autres dimensions étant définies, en fonction du système optique utilisé, dans le plan du capteur.

2. Procédé selon la revendication 1, caractérisé en ce que la grille à profil sinusoïdal est projetée suivant un faisceau de rayons parallèles.

3. Procédé selon la revendication 1, caractérisé en ce que la grille à profil sinusoïdal est projetée suivant un faisceau de rayons divergents et en ce que le plan de référence est perpendiculaire à l'axe de projection.

4. Procédé selon les revendications 1 à 3, caractérisé en ce qu'il consiste à utiliser conjointement une projection complémentaire d'un deuxième système de franges, afin d'obtenir une différence de phase très précise avec une indétermination de $2\pi$ avec le premier système, et une différence grossière de phase mais sans indétermination de $2\pi$ avec le second, et en ce que la corrélation des deux résultats donne une différence de phase très précise et sans indétermination de $2\pi$ en tout point.

5. Procédé selon la revendication 4, caractérisé en ce que le second système de franges est réalisé par une projection unique sans décalage et en ce que, dans ce cas, le calcul de différence de phase est effectué par une méthode de sous-échantillonnage ou une méthode de FOURRIER ou toute autre méthode équivalente d'analyse de la phase.

6. Procédé selon l'une quelconque des revendications 1 a 3, caractérisé en ce qu'il consiste à analyser les variations de la phase du codage déformé par l'objet dans les deux directions (x, y) définies dans le plan du capteur, en tenant compte du taux de modulation et de la réflectivité de l'objet, pour produire une image binaire codée 1 si la phase existe et est continue, et codée O si la phase n'existe pas ou est discontinue, puis en considérant l'ensemble des images ainsi obtenues, à regrouper les images de même valeur, et à en définir la frontière par des méthodes de dilatation-érosion et de squelettisation d'objets binaires.

7. Procédé selon l'une quelconque des revendications 1 à 6, caractérisé en ce que le nombre de projections d'images de la grille sur la partie du corps à observer est supérieur ou égal à 3.

8. Procédé selon l'une quelconque des revendications 1 à 7, caractérisé en ce qu'il consiste à disposer sur la partie du corps à observer une pluralité de points de repères visibles dans chacune des positions de prise d'image, à effectuer plusieurs vues sous des angles différents, à détecter dans chacune des vues la position (x, y) de chaque point, puis par interpolation sur le relief, la valeur z de celui-ci, puis par association des points de repères identiques physiquement à rassembler l'ensemble des surfaces de chaque vue dans un même relief dont les coordonnées sont définies par rapport a un seul et même référentiel commun.

9. Procédé selon la revendication 8, caractérisé en ce qu'il consiste à calculer la position de chaque point de repère en x et y sur l'image de réflectivité, par analyse de l'histogramme des niveaux de gris, puis à sélectionner les taches noires d'une grosseur convenable, et enfin à donner le centre de gravité pondéré par les niveaux de gris à l'intérieur de ces micro-taches.

10. Procédé selon l'une quelconque des revendications 8 et 9, caractérisé en ce que les points de repères sont constitués par des points caractéristiques de la partie du corps à étudier, tels que sillon, cuspide, plateau du moignon, rayures, ou des points supportés par des objets rapportés sur le corps à étudier tels que des clamps, dans le cas d'une application dentaire.

11. Procédé selon l'une quelconque des revendications 8 et 9, caractérisé en ce que les points de repères sont déposés, par projection d'encre ou similaire, sur la partie du corps à étudier.

12. Dispositif pour la mise en oeuvre du procédé selon l'une quelconque des revendications 1 à 11, caractérisé en ce qu'il comprend une sonde optique (2) constituée d'une voie de projection (9) d'un codage sur la partie du corps à analyser, d'une voie d'observation (10) du corps ainsi codé, cette sonde optique étant connectée à une source de lumière (3) séparée ou non, et à un calculateur comprenant six modules électroniques reliés par trois bus, les modules étant constitués par une carte unité centrale (36), une carte de mémoire vive de calcul (37), une carte interfaces spécialisées (38), une carte de traitement du signal vidéo (39), une carte mémoire d'images (40) et une carte processeur de calcul spécialisé (42).

13. Dispositif selon la revendication 12, caractérisé en ce que, dans le cas où la source de lumière (3) est distincte de la sonde (2), la lumière est collimatée à l'aide d'une optique de couplage, à partir du centre de laquelle l'extrémité d'une fibre optique est vue sous un angles α ,tel que α est inférieur ou égal à P/4D, où P est le pas de la grille et D la profondeur de champ maximale correspondant à une modulation correcte de la grille projetée.

14. Dispositif selon l'une quelconque des revendications 12 et 13, caractérisé en ce que la longueur d'onde de la lumière projetée est inférieure a 520 $\mu$m, et la source lumineuse émet dans le bleu ou l'ultra-violet.

15. Dispositif selon l'une quelconque des revendications 12 et 13, caractérisé en ce que la source lumineuse est un dispositif solide à semi-conducteur de type diode laser.

16. Dispositif selon la revendication 12, caractérisé en ce que la voie de projection du codage comprend une optique collimation (13), un réseau (14) muni de son système de déphasage (15) et un système optique d'imagerie comprenant une optique relais (14), une optique de transport d'image (17) et un objectif de projection (18).

17. Dispositif selon la revendication 16, caractérisé en ce que le réseau de transmission comprend un prisme de Wollaston (20) constitué par deux coins semblables (22) taillés dans un matériau biréfringent (par exemple du quartz dont les axes rapide et lent sont opposés), éclairé par une onde lumineuse monochromatique, placé entre deux polarisateurs (23, 24) dont les axes sont croisés ou parallèles et font un angle de 45° avec ceux du prisme, la valeur p du pas des franges créées a l'interface du prisme étant donnée par la formule

$$P = \frac{\lambda}{2\Delta n \ \text{tg} \ \theta}$$

où $\lambda$ est la longueur d'onde de la source lumineuse,
où $\theta$ est l'angle de chacun des prismes biréfringents constituant le prisme de Wollaston,
$\Delta n$ est la différence des indices ordinaire et extraordinaire du matériau.

**18.** Dispositif selon l'une quelconque des revendications 16 et 17, caractérisé en ce que le système de déphasage comprend un barillet motorisé (27) comportant plusieurs lames cristallines (26) de déphasage connu, de manière à les introduire séquentiellement et en synchronisation avec la prise d'image.

**19.** Dispositif selon l'une quelconque des revendications 16 et 17, caractérisé en ce qu'une lame quart d'onde (28) est placée après le prisme de Wollaston (20), avec ses axes rapide et lent à 45° des axes du prisme et en ce que l'analyseur (24) tourne sur lui-même permettant de sélectionner continuellement une valeur de déphasage entre 0 et $2\pi$.

**20.** Dispositif selon l'une quelconque des revendications 16 et 17, caractérisé en ce que le système de modulation de phase comprend une lame de verre (25) d'indice n et d'épaisseur e montée pivotante pour provoquer un déplacement latéral du faisceau d'un valeur S telle que :

$$S = e\ \frac{\sin(i-r)}{\cos(r)}$$

où i est l'angle d'incidence du faisceau sur la lame et r l'angle réfracté, ces angles étant liés par la relation :

$\sin i = n \sin r$

**21.** Dispositif selon l'une quelconque des revendications 18 et 19, caractérisé en ce que les moyens d'entraînement en rotation des lames sont constitués par un moteur pas à pas, la position des lames étant connue par comptage des pas à partir d'une position de référence déterminée par utilisation d'un disque fendu ou troué fixé sur le barillet ou sur l'arbre moteur, d'un côté duquel est disposée une photo-diode éclairant le disque et de l'autre côté duquel se trouve une cellule photo-électrique qui, lorsqu'elle est activée par la photo-diode, émet un signal vers le système de traitement.

**22.** Dispositif selon l'une quelconque des revendications 18 et 19, caractérisé en ce que les moyens d'entraînement en rotation des lames sont constitués par un moteur à courant continu, dont les moyens de commande comprennent un potentiomètre résistif monté en bout d'un axe du barillet porte-lames, la mesure de résistivité du potentiomètre permettant de connaître la position en continu de l'arbre du moteur.

**23.** Dispositif selon l'une quelconque des revendications 12 à 22, caractérisé en ce que la sonde (2) est équipée d'un système d'insufflation d'un jet d'air comprimé (35) sur l'objet à observer, en bout du bec et dans la direction de l'observation.

**24.** Dispositif selon l'une quelconque des revendications 12 à 22, caractérisé en ce que la sonde est équipée d'un système évitant la formation de buée, comprenant des moyens de chauffage à une température au moins égale à 30°C, ces moyens de chauffage fonctionnant lorsque la sonde est en position d'observation ou lorsqu'elle est en position de repos sur un support.

**25.** Dispositif selon l'une quelconque des revendications 12 à 24, caractérisé en ce que les six modules électroniques du calculateur sont reliés entre eux par un bus vidéo-numérique (43), un bus processeur (44) et un bus système (45).

**26.** Dispositif selon la revendication 25, caractérisé en ce que la carte de traitement du signal vidéo servant d'interface entre la caméra disposée dans la sonde d'une part, l'écran de visualisation et le calculateur d'autre part, reçoit en entrée un signal analogique des images provenant de la sonde qui, d'une part, est conditionné (47) et injecté à l'entrée d'un numériseur (48) constitué par un convertisseur analogique-numérique sur au moins huit bits, lequel signal numérisé est ensuite envoyé sur le bus vidéo (43) et qui, d'autre part, est envoyé à l'écran de visualisation, à travers un sous module de visualisation.

**27.** Dispositif selon la revendication 25, caractérisé en ce que la carte de traitement du signal vidéo servant d'interface entre la caméra disposée dans la sonde d'une part, l'écran de visualisation et le calculateur d'autre part, reçoit en entrée un signal numérique de huit bits image au moins provenant du bus vidéo qui sont injectés, après leur passage dans une table de conversion programmable depuis le bus système, dans un convertisseur numérique analogique (49), et mélange ce signal analogique avec, premièrement, une image graphique provenant d'au moins un bit graphique du bus vidéo (43), deuxièmement, des caractères alphanumériques provenant d'un sous-module (50) permettant de générer ces dits caractères à partir du bus système (45) et, troisièmement, un curseur de forme quelconque provenant d'un sous-module (52) générateur de curseur associé à un registre de commande de position et, enfin, envoie le signal résultat à l'écran de visualisation, l'image ainsi constituée sur l'écran se décomposant en parties distinctes ou superposées :

- une partie représentant l'un des plans mémoire image ou bien l'image provenant de la sonde sur laquelle apparaît, en surbrillance ou en couleurs différentes, l'état du ou des bits provenant des plans des mémoires graphiques sélectionnés,

- une partie qui constitue une une d'affichage de texte alpha-numérique,

- un curseur de forme quelconque qui peut être activé et qui peut adresser n'importe quel point de l'écran.

28. Dispositif selon la revendication 25, caractérisé en ce que la carte processeur reçoit en entrée simultanément, un flot de données numériques d'au moins deux images provenant par le bus processeur (44), de la carte mémoire image, traite ce flot de données, pixel à pixel, suivant des programmes de calculs préchargés par le bus système (45) et délivre, sur ce même bus processeur, les résultats desdits calculs sous forme numérique.

29. Dispositif selon la revendication 25, caractérisé en ce que la carte mémoire d'image contient au moins quatre images (60-63) numérisées de huit bits chacune, un plan graphique (64) de quatre bits, et dispose d'un sous-module (65) programmable par le bus système (45) qui permet de multiplexer et d'aiguiller ces dits images et plans graphiques en entrée ou en sortie vers les trois bus systèmes (45), vidéo (43) et processeur (44).

30. Dispositif selon la revendication 25, caractérisé en ce que la carte interfaces spécialisées dispose de moyens électroniques permettant de synchroniser l'acquisition des images provenant de la sonde (2) avec la carte mémoire, et les moyens d'entraînement en rotation des lames, ces moyens électroniques étant déclenchés extérieurement par l'utilisateur.

31. Dispositif selon la revendication 25, caractérisé en ce que le calculateur comprend six modules électroniques contenus sur une même carte, la carte étant divisée en six parties imbriquées, constituées par une unité centrale, une mémoire vide de calcul, une interface spécialisée, une électronique de traitement de signal vidéo, une mémoire d'images et un processeur de calculs spécialisés, reliées entre elles par un bus vidéo-numérique, un bus processeur et un bus système.

## Claims

1. A method for taking a tridimensional medical imprint, through the projection of a coding from a monochromatic light source onto the part of the body, the imprint of which is to be taken, **characterized** in that it consists in projecting onto the part of the body, the imprint of which is to be taken, a grating having a sinusoidal profile, and then repeating this projection at least twice during a very short time, with a phase shift between two successive projections having a value equal to $2\pi/n$, wherein n is the number of projections; carrying out an optical reading of each projected image, memorizing each one of said images, and then correlating them while observing the intensity variations resulting from the variations of the phase shift at each point of the object, and while making it possible to determine through a calculation the depth of each point relative to a reference plane, the other two dimensions being defined in the plane of the sensor, according to the optical system being used.

2. A method according to Claim 1, characterized in that the grating with a sine wave profile is projected along a beam of parallel rays.

3. A method according to Claim 1, characterized in that the grating with a sine wave profile is projected along a beam of diverging rays, and in that the reference plane is perpendicular to the projection axis.

4. A method according to Claims 1 - 3, characterized in that it consists in jointly using a complementary projection of a second system of fringes, so as to obtain a very precise phase difference, with an indetermination of $2\pi$, with the first system, and a coarse phase difference - however, without the indetermination of $2\pi$ - with the second system and in that the correlation of the two results gives at every point a very precise phase difference, and without a $2\pi$ indetermination.

5. A method according to Claim 4, characterized in that the second system of fringes is produced by a single projection without a phase shift, and in that, in this case, the calculation of the phase difference is carried out with a sub-sampling method or with a FOURIER transform, or any other equivalent method of phase analysis.

6. A method according to any one of Claims 1 - 3, characterized in that it consists in analysing the phase variations of the coding being distorted by the object in the two directions (x, y) defined in the sensor plane, while taking into account the modulation depth and the object's reflectivity, for producing a binary image coded 1 if the phase exists and is continuous, and coded O if the phase does not exist or is discontinuous, and then, while considering the set of images being thus obtained, in gathering together the images having the same value, and in defining the boundary thereof through methods of dilatation-erosion and of skeletonization of binary objects.

7. A method according to any one of Claims 1 - 6, characterized in that the number of projections of images of the grating onto the part of the body which is to be observed is greater than or equal to 3.

8. A method according to any one of Claims 1 - 7, characterized in that it consists in placing on the part of the body which is to be observed a plurality of locating dots visible in each one of the image-taking positions, in detecting in each one of the views the (x, y) position of each dot, and then, through an interpolation made on the relief, the z value thereof, and then, by associating physically identical locating dots, in gathering together the set of the surfaces of each view within a same relief, the coordinates of which are defined relative to a same and only common reference system.

9. A method according to Claim 8, characterized in that it consists in calculating the (x and y) position of each locating dot on the reflectivity image through an analysis of the histogram of the gray levels, and then in selecting the black spots of a suitable size, and finally in determining the gravity center weight-adjusted with the gray levels within the said micro-spots.

10. A method according to any one of Claims 8 and 9, characterized in that the locating dots are constituted by characteristic points of the body part to be studied, such as a fissure, a cuspid, a plateau of a stump, furrows, or by points carried on objects placed on the body to be studied, such as clamps, in the case of a dental application.

11. A method according to any one of Claims 8 and 9, characterized in that the locating dots are deposited, through a projection of ink or the like, onto the body part to be studied.

12. A device for implementing the method according to any one of Claims 1 - 11, characterized in that it includes an optical probe (2) formed of a projection path (9) for projecting a coding onto the body part to be analysed, of an observation path (10) for observing the body being thus coded, this optical probe being connected to a light source (3) being separate, or not, and to a computer comprising six electronic modules linked by three bus lines, said modules being constituted by a central processing unit card (36), a calculation RAM memory card (37), a card of specialized interfaces (38), a video signal processing card (39), an image memory card (40) and a specialized calculation processor card (42).

13. A device according to Claim 12, characterized in that, when the light source (3) is separate from the probe (2), the light is collimated by means of a coupling optical device, from the center of which the end of an optical fibre is viewed along an angle $\alpha$ such that $\alpha$ is less than or equal to P/4D, wherein P is the pitch of the grating and D is the maximum depth of field corresponding to a correct modulation of the projected grating.

14. A device according to any one of Claims 12 and 13, characterized in that the wave length of the projected light is shorter than 520 $\mu$m, and the light source is emitting in the blue or ultraviolet range.

15. A device according to any one of Claims 12 and 13, characterized in that the light source is a solid-state semiconductor device of the laser diode type.

16. A device according to Claim 12, characterized in that the coding projection path comprises a collimating optical device (13), a grating (14) provided with its phase-shift system (15), and an imaging optical system comprising a relaying optical device (16), an image transport optical device (17) and a projection objective (18).

17. A device according to Claim 16, characterized in that the transmission grating comprises a Wollaston prism (20) formed of two similar wedges (22) cutout from a birefringent material (for instance, quartz having opposed fast and slow axes), lit by a monochromatic light wave, placed between two polarizers (23, 24), the axes of which are crossed or parallel and form an angle of 45° with the axes of the prism, the value P of the pitch of the fringes created at the prism interface being given by the formula :

$$P = \frac{\lambda}{2 \, \Delta n \, tg \, \theta}$$

wherein :

$\lambda$     is the wavelength of the light source,

$\theta$     is the angle of each one of the birefringent prisms forming the Wollaston prism,

$\Delta n$     is the difference between the ordinary and extraordinary refractive indicia of the material.

18. A device according to any one of Claims 16 and 17, characterized in that the phase shift system comprises a motor-driven cylinder (27) comprising several crystalline blades (26) having a known phase shift, so that said blades will be introduced sequentially and in synchronization with the image-taking.

19. A device according to any one of Claims 16 and 17, characterized in that a quarter-wave blade (28) is placed after the Wollaston prism (20) with its fast and slow axes at 45° from the axes of the prism, and in that the analyser (24) revolves about its own axis, thereby allowing a phase-shift value comprised between 0 and 2 $\pi$ to be continually selected.

20. A device according to any one of Claims 16 and 17, characterized in that the phase modulation system comprises a glass blade (25) having an index n and a thickness e which is pivotally mounted for causing a lateral displacement of the beam with a value S such that :

$$S = e \, \frac{\sin(i-r)}{\cos(r)}$$

wherein

i     is the angle of incidence of the beam on the blade, and

r     is the refracted angle,

these angles being linked by the relationship :

sin i = n sin r

21. A device according to any one of Claims 18 and 19, characterized in that the means for rotatably driving the blades are constituted by a stepping motor, the position of the blades being known through a counting of the steps from a determined reference point, by using a split or perforated disc fixed onto the cylinder or onto the drive shaft, while a photo-diode casting light on the disc is disposed on one side of said disc and a photo-cell is disposed on its other side, so that upon being activated by the photo-diode, it emits a signal towards the processing system.

22. A device according to any one of Claims 18 and 19, characterized in that the means for rotatably driving the blades are constituted by a direct current motor, the control means of which include a resistive potentiometer mounted on the end of an axis of the blade-carrying cylinder, a measurement of the potentiometer resistivity providing means for continuously knowing the position of the motor's shaft.

23. A device according to any one of Claims 12 - 22, characterized in that the probe (2) is equipped with a system for blowing a jet of pressurized air (35) upon the object being observed, on the tip of the probe and along the direction of observation.

24. A device according to any one of Claims 12 - 22, characterized in that the probe is equipped with a system for avoiding the formation of mist, comprising heater means giving a temperature of at least 30° C, said heater means being operative when the probe is in an observation position or when it is in rest position on a support.

25. A device according to any one of Claims 12 - 24, characterized in that the six electronic modules of the computing system are connected together by a video-digital bus (43), a processor bus (44) and a system bus (45).

26. A device according to Claim 25, characterized in that the card for processing the video signal, serving as an interface between the camera disposed in the probe, on the one hand, the visual display screen and the computer, on the other hand, receives as input an analogical signal of the images coming from the probe, this signal being, on the one hand, conditioned (47) and injected to the input of a digitalizer (48) constituted by an analog/digital converter over at least eight bits, said digitalized signal being thereafter sent along the video bus (43) and being, on the other hand, sent to the visual display screen through a visualization sub-module.

27. A device according to Claim 25, characterized in that the card for processing the video signal, serving as an interface between the camera disposed in the probe, on the one hand, the visual display screen and the computer, on the other hand, receives as input a digital signal of at least eight image bits coming from the video bus which are injected, after passing through a conversion table being programmable from the system bus, into a digital/analog converter (49) and mixes this analog signal with, firstly, a graphic image coming from at least one graphic bit of the video bus (43), in the second place with alphanumeric characters coming from a sub-module (50) capable of generating the said characters, starting from the system bus (45) and, in the third place, a cursor of any shape coming from a cursor-generating sub-module (52) associated with a position control register, and finally sends the resulting signal to the visual display screen, the image being thus formed on the screen being divided into distinct or superposed portions :
   - one portion representing one of the image memory planes, or else the image coming from the probe, on which will appear, with extra brightness, or in different colours, the state of the bit or bits coming from the selected planes of the graphic memories,
   - one portion forming a display area for the alphanumeric text,
   - a cursor of any shape which can be activated and can address any point of the screen.

28. A device according to Claim 25, characterized in that the processor card receives as a simultaneous input, a stream of digital data of at least two images coming along the processor bus (44) from the image memory card, processes this data stream, pixel by pixel, according to calculation programs preloaded by the system bus (45) and delivers, on this same processor bus, the result of the said calculations in digital form.

29. A device according to Claim 25, characterized in that the image memory card contains at least four digitalized images (60 - 63) of eight bits each, a graphic plane (64) of four bits, and is provided with a sub-module (65) being programmable by the system bus (45) which makes it possible to multiplex said images and graphic planes and to steer them as input or output towards the three buses, namely the system bus (45), the video bus (43) and the processor bus (44).

30. A device according to Claim 25, characterized in that the card of specialized interfaces is provided with electronic means for synchronizing the acquisition of the images coming from the probe (2) with the memory card and with the means for rotatably driving the blades, these electronic means being triggered externally by the user.

31. A device according to Claim 25, characterized in that the computer comprises six electronic modules contained on one same card, the card being divided into six nested portions constituted by a central processing unit, a calculation RAM memory, a specialized interface, a video signal electronic processor, an image memory and a processor for specialized calculations, connected together through a video-digital bus, a processor bus and a system bus.

**Patentansprüche**

1. Verfahren zum Erstellen eines dreidimensionalen Abdrucks für medizinische Zwecke durch Projektion einer Codierung von einer monochromatischen Lichtquelle auf den Körperteil, von dem der Abdruck gemacht werden soll, dadurch gekennzeichnet, daß ein Gitter eines sinusförmigen Profils auf den Körperteil, von dem der Abdruck gemacht werden soll, projiziert wird, daß diese Projektion mindestens zweimal während einer sehr kurzen Zeit mit einer Phasenverschiebung zwischen zwei aufeinanderfolgenden Projektionen mit einem wert von 2 $\pi$/n wiederholt wird, wobei n die Zahl der Projektionen ist, daß ein optisches Auslesen jedes projizierten Bilds erreicht wird und jedes dieser Bilder gespeichert wird, und daß die Bilder korreliert werden, indem man die Intensitätsveränderungen, die sich aus den Variationen der Phasenverschiebungen ergeben, an jedem Punkt des Objekts beobachtet und die Tiefe jedes Punkts zu einer Referenzebene durch Rechnen bestimmt, wobei die beiden anderen Dimensionen als Funktion des benutzten optischen Systems in der Ebene des Meßfühlers festgelegt sind.

2. Verfahren nach Anspruch 1, dadurch gekennzeichnet, daß das Gitter des sinusförmigen Profils entsprechend einem Bündel aus parallelen Strahlen projiziert wird.

3. Verfahren nach Anspruch 1, dadurch gekennzeichnet, daß das Gitter des sinusförmigen Profils entsprechend einem Bündel aus divergierenden Strahlen projiziert wird, und daß die Referenzebene senkrecht auf der Projektionsachse liegt.

4. Verfahren nach Anspruch 1 bis 3, dadurch gekennzeichnet, daß zusätzlich eine komplementäre Projektion eines zweiten Streifensystems benutzt wird, um eine sehr genaue Phasendifferenz mit einer Unbestimmtheit von $2\pi$ zu dem ersten System und eine große Phasendifferenz jedoch ohne Unbestimmtheit von $2\pi$ mit dem zweiten zu haben, und daß die Korrelation der beiden Resultate eine sehr genaue Phasendifferenz ohne die Unbestimmtheit von $2\pi$ in jedem Punkt ergibt.

5. Verfahren nach Anspruch 4, dadurch gekennzeichnet, daß das zweite Streifensystem durch eine einzige Projektion ohne Verschiebung realisiert wird, und daß in diesem Fall die Berechnung der Phasendifferenz durch eine Probenmethode oder eine Fourrier-Methode oder jede andere Methode der Phasenanalyse erfolgt.

6. Verfahren nach einem der Ansprüche 1 bis 3, dadurch gekennzeichnet, daß die Variationen der Phasencodierung, die durch das Objekt in den zwei durch die Ebene des Meßfühlers definierten Richtungen (x, y) deformiert sind, entsprechend dem Modulationsgrad und dem Reflexionsvermögen des Objekts analysiert werden, um ein mit 1 codiertes Bild, falls die Phase existiert und fortgesetzt wird, und mit 0 codiertes Bild, falls die Phase nicht existiert und nicht fortgesetzt wird, zu produzieren, daß dann die auf diese Art erhaltenen Bilder beobachtet werden, daß die Bilder des gleichen Werts gruppiert werden, und daß dabei die Grenze durch die Methoden der Dilatationserosion und der binären Objektverrippung bestimmt wird.

7. Verfahren nach einem der Ansprüche 1 bis 6, dadurch gekennzeichnet, daß die Anzahl der Bildprojektionen des Gitters auf den Teil des zu beobachtenden Körpers größer oder gleich 3 ist.

8. Verfahren nach einem der Ansprüche 1 bis 7, dadurch gekennzeichnet, daß auf den Teil des zu beobachtenden Körpers eine Vielzahl von Markierungspunkten, die in jeder Projektion der Bildaufnahme sichtbar sind, aufgebracht werden, daß mehrere Aufnahmen unter unterschiedlichen Winkeln durchgeführt werden, daß bei jeder Aufnahme die Lage (x, y) jedes Punkts dann durch Interpolation über das Relief sein z-Wert, dann durch physische Verbindung der identischen Markierungspunkte zum Verbinden der gesamten Oberfläche jeder Aufnahme in dem gleichen Relief bestimmt wird, dessen Koordinaten durch die Beziehung zu einer einzigen gemeinsamen Referenz bestimmt sind.

9. Verfahren nach Anspruch 8, dadurch gekennzeichnet, daß die Position jedes Markierungspunkts in x und y in dem reflektierten Bild durch Analyse des Histogramms des Grauniveaus gerechnet wird, und daß dann die schwarzen Flecken einer geeigneten Größe selektiert und schließlich der Schwerpunkt des Grauniveaus im Innern dieser Mikroflecken bestimmt wird.

10. Verfahren nach Anspruch 8 oder 9, dadurch gekennzeichnet, daß die Markierungspunkte durch die charakteristischen Punkte des Teils des zu studierenden Körpers, wie Furche, Dorn, Stumpfplateau, Schrammen oder durch die Punkte, die von den auf den zu studierenden Körper aufgesetzten Objekte, wie Klammern, gebildet sind, bei dentaler Anwendung bestimmt werden.

11. Verfahren nach Anspruch 8 oder 9, dadurch gekennzeichnet, daß die Markierungspunkte durch Aufbringen von Farbe o. dgl. auf den Teil des zu studierenden Körpers festgelegt werden.

12. Vorrichtung zur Durchführung des Verfahrens nach einem der Ansprüche 1 bis 11, dadurch gekennzeichnet, daß sie eine optische Sonde (2) aufweist, die eine Projektionsspur (9) einer Codierung auf dem zu analysierenden Körperteil einer Beobachtungsspur (10) des ebenso codierten Körpers darstellt, wobei diese optische Sonde mit einer getrennten oder nichtgetrennten Lichtquelle (3) und einem Rechner verbunden ist, der sechs elektronische Module besitzt, die mit drei Bussen verbunden sind, wobei die Module eine Zentralkarte (36), eine Schreib-Lese-Speicherrechnerkarte (37), eine spezialisierte Sprungkarte (38), eine Karte zur Behandlung von Videosignalen (39), eine Bildspeicherkarte (40) und eine Prozessorkarte für spezielle Rechnungen (42) aufweisen.

13. Vorrichtung nach Anspruch 12, dadurch gekennzeichnet, daß im Fall der Trennung der Lichtquelle (3) von der Sonde (2) das Licht mittels eines Optokopplers gebündelt wird, ausgehend vom Zentrum, von dem das Ende einer optischen Faser unter einem Winkel α gesehen wird, wobei α kleiner oder gleich P/4D ist und P der Gitterschritt und D die Tiefe des maximalen Felds entsprechend einer korrekten Modulation des projizierten Gitters ist.

14. Vorrichtung nach Anspruch 12 oder 13, dadurch gekennzeichnet, daß die Wellenlänge des projizierten Lichts unter 520 μm ist und die Lichtquelle in blauem oder ultraviolettem Bereich strahlt.

15. Vorrichtung nach Anspruch 12 oder 13, dadurch gekennzeichnet, daß die Lichtquelle ein Halbleiter vom Typ Diodenlaser ist.

16. Vorrichtung nach Anspruch 12, dadurch gekennzeichnet, daß die Projektionsspur der Codierung eine optische Bündelung (13), ein Raster (14), versehen mit seinem System der Phasenverschiebung (15), und ein optisches Bildersystem aufweist, das ein optisches Relais (14), eine Optik zum Bildtransport (17) und ein Projektionsobjektiv (18) enthält.

17. Vorrichtung nach Anspruch 16, dadurch gekennzeichnet, daß das Raster der Übertragung ein Wollastonprisma (20) aufweist, das von zwei gleichen Keilen (22) aus doppelt-brechendem Material (z. B. aus Quarz, dessen schnelle und langsame Achsen entgegengesetzt angeordnet sind) gebildet ist, und durch eine monochromatische Lichtwelle beleuchtet ist, die zwischen zwei Polarisatoren (23, 24) plaziert ist, deren Achsen gekreuzt oder parallel sind und einen Winkel von 45° mit denen des Prismas bilden, wobei der Wert p des Streifenschritts, der an der inneren Grenzfläche des Primas gebildet wird, sich nach der Formel

$$p = \frac{\lambda}{2 \, \Delta n \cdot tg\, \theta}$$

verhält, wobei λ die Wellenlänge der Lichtquelle ist, θ oder Winkel jedes doppeltbildenden Prismas des Wollastonprismas und Δn die Differenz der normalen und außergewöhnlichen Materialkennziffern ist.

18. Vorrichtung nach einem der Ansprüche 16 und 17, dadurch gekennzeichnet, daß das System der Phasenverschiebung eine motorisch angetriebene Trommel (27) mit mehreren Kristallschichten (26) bekannter Phasenverschiebung enthält, um sie infolge und synchron mit der Bildfolge einzuführen.

19. Vorrichtung nach einem der Ansprüche 16 und 17, dadurch gekennzeichnet, daß eine λ/4-Platte (28) hinter dem Wollastonprisma (20) mit seinen schnellen und langsamen Achsen in 45° zu dem Prismenachsen angeordnet ist, und daß der Analysator (24) um sich selbst dreht, um kontinuierlich einen Wert der Phasenverschiebung zwischen 0 und 2 π zu selektieren.

20. Vorrichtung nach einem der Ansprüche 16 und 17, dadurch gekennzeichnet, daß das System der Phasenmodulation eine Glasscheibe (25) mit dem Brechungsindex n und der Dicke e und schwenkbar gelagert aufweist, um eine seitliche Verschiebung des Bündels entsprechend einem Wert S nach der Formel

$$s = e \; \frac{\sin \, (i-r)}{\cos \, (r)}$$

zu erreichen, wobei i der Eintrittswinkel des Bündels auf der Schicht und r der Brechungswinkel ist und beide Winkel durch die Relation

sin i = n · sin r

verbunden sind.

21. Vorrichtung nach einem der Ansprüche 18 und 19, dadurch gekennzeichnet, daß die Mittel für den Rotationsantrieb der Schichten von einem Schrittmotor gebildet sind, wobei die Lage der Schichten durch Zählen der Schritte von einer Ausgangsreferenzposition, die durch Benutzung einer Spaltenscheibe oder Lochscheibe auf der Trommel oder der Welle des Motors festgelegt ist, bekannt ist, wobei von der einen Seite eine Fotodiode die Scheibe bestrahlt und auf der anderen Seite eine Fotozelle angeordnet ist, die bei Aktivierung durch die Fotodiode ein Signal zu dem Behandlungssystem aussendet.

22. Vorrichtung nach einem der Ansprüche 18 und 19, dadurch gekennzeichnet, daß die Mittel für den Rotationsantrieb der Schichten von einem kontinuierlich angetriebenen Motor gebildet sind, dessen Steuermittel ein Widerstandspotentiometer am Ende der Welle der die Schichten tragenden Trommel beinhalten, wobei die Messung des spezifischen Leitungswiderstands des Potentiometers die Erkennung der kontinuierlichen Lage der Welle des Motors erlaubt.

23. Vorrichtung nach einem der Ansprüche 12 bis 22, dadurch gekennzeichnet, daß die Sonde (2) mit einem System zum Ausblasen von Strahlen von Druckluft (35) auf das zu beobachtende Objekt am Ende der Spitze und in Beobachtungsrichtung versehen ist.

24. Vorrichtung nach einem der Ansprüche 12 bis 22, dadurch gekennzeichnet, daß die Sonde mit einem System zur Verhinderung einer Dampfbildung mit Mitteln zum Aufheizen auf eine Temperatur von mindestens 30°C versehen ist, wobei die Mittel zum Aufheizen arbeiten, wenn sich die Sonde in Beobachtungsposition oder in einer Ruheposition auf einem Träger befindet.

25. Vorrichtung nach einem der Ansprüche 12 bis 24, dadurch gekennzeichnet, daß die sechs elektronischen Module des Rechners miteinander durch einen videonumerischen Bus (43), einen Busprozessor (44) und einen Systembus (45) verbunden sind.

26. Vorrichtung nach Anspruch 25, dadurch gekennzeichnet, daß die Karte zur Behandlung von Videosignalen, die dem Übergang zwischen der Kamera in der Sonde einerseits, dem Anzeigeschirm und dem Rechner andererseits dient, am Eingang ein analoges Bildersignal empfängt, welches von der Sonde stammt, die einerseits geregelt (47) ist und mit dem Eingang eines Numerisators (48) verbunden ist, der von einem Analog/Digital-Wandler mit mindestens 8 bit gebildet ist, dessen Digitalsignal zu dem Videobus (43) geschickt wird und der andererseits mit dem Anzeigeschirm über einen Anzeigemodul verbunden ist.

27. Vorrichtung nach Anspruch 25, dadurch gekennzeichnet, daß die Karte zur Behandlung von Videosignalen, die dem Übergang zwischen der Kamera in der Sonde einerseits, dem Anzeigeschirm und dem Rechner andererseits dient, am Eingang ein digitales Bildersignal von mindestens 8 bit empfängt, welches von dem Videobus stammt und die nach ihrem Durchgang durch eine programmierbare Umrechnungstafel nach dem Bussystem in einen Digital/Analog-Wandler (49) gespeist wird, und daß das Analogsignal zuerst mit einem grafischen Bild von mindestens einem grafischen bit des Videobusses (43), zweitens mit alphanumerischen Eigenschaften von einem Untermodul (50) zum Generieren der besagten Eigenschaften am Anfang des Bussystems (45) und drittens mit einem Zeiger gleich welcher Form eines Untermoduls (52) zum Generieren des Zeigers in Verbindung mit einem Steuerregister für die Position gemischt wird und schließlich das resultierende Signal zu dem Anzeigeschirm geschickt wird, wobei das so auf dem Schirm gebildete Bild sich in bestimmte Teile oder überlagerte Teile aufgliedert:

- ein Teil, der eine der Bildspeicherebenen oder das vorangehende Bild der Sonde, auf der sie erscheint, in Überhelligkeit oder in verschiedenen Farben die Lage des oder der bits der selektierten grafischen Bildspeicherebenen repräsentiert,
- ein Teil, der eine Anzeigezone für den alphanumerischen Text bildet,
- ein Zeiger gleich welcher Form, der aktivierbar ist und der irgendeinen Punkt des Schirms adressieren kann.

28. Vorrichtung nach Anspruch 25, dadurch gekennzeichnet, daß die Prozessorkarte am Eingang gleichzeitig eine Reihe numerischer Daten von mindestens zwei Bildern, die von dem Busprozessor (44) der Bildspeicherkarte stammen, empfängt, diese Datenreihe, Pixel für Pixel, entsprechend in das Bussystem (45) eingegebener Rechenprogramme behandelt und über denselben Busprozessor die Resultate der Rechnungen in numerischer Form ausgibt.

29. Vorrichtung nach Anspruch 25, dadurch gekennzeichnet, daß die Bildspeicherkarte mindestens vier numerische Bilder (60 - 63) von jeweils 8 bit, eine grafische Ebene (64) von 4 bit enthält und einen Untermodul (65) bestimmt, der von dem Bussystem (45) programmierbar ist und der es gestattet, die Bilder und die grafischen Elemente am Eingang oder am Ausgang zu den drei Bussen Systembus (45), videobus (43) und Prozessarbus (44) zu multiplexen und umzusetzen.

30. Vorrichtung nach Anspruch 25, dadurch gekennzeichnet, daß die spezialisierte Sprungkarte elektronische Mittel bestimmt, die es gestatten, die Bilderfassung der Sonde (2) mit der Speicherkarte und die Mittel des Rotationsantriebs der Schichten zu synchronisieren, wobei die elektronischen Mittel von außen durch den Benutzer ausgeschaltet werden.

31. Vorrichtung nach Anspruch 25, dadurch gekennzeichnet, daß der Rechner sechs elektronische Module auf ein und derselben Karte aufweist, wobei die Karte in sechs verschachtelte Bereiche unterteilt ist und von einer zentralen Einheit, einem Schreib-Lese-Speicherrechner, einem speziellen Sprungbereich, einem elektronischen Bereich zur Behandlung von Videosignalen, einem Bildspeicher und einem speziellen Rechenprozessor gebildet wird, wobei diese Bereiche untereinander durch einen videonumerischen Bus, einen Prozessorbus und einen Systembus verbunden wird.

FIG.1

FIG.2

FIG.3

FIG.4

FIG.5

FIG.6

FIG.7

FIG.8

FIG.9

FIG.10

FIG.11